Europäisches Patentamt

European Patent Office

Office européen des brevets

(19)

(11) Veröffentlichungsnummer: **0 025 186**
**B1**

(12) **EUROPÄISCHE PATENTSCHRIFT**

(45) Veröffentlichungstag der Patentschrift: **18.01.84**

(21) Anmeldenummer: **80105105.3**

(22) Anmeldetag: **28.08.80**

(51) Int. Cl.³: **C 08 L 95/00,** C 10 C 3/12, E 01 C 19/02

(54) Verfahren und Vorrichtung zum Aufbereiten von bituminösem Mischgut in einer befeuerten Drehtrommel.

(30) Priorität: **08.09.79 DE 2936341**

(43) Veröffentlichungstag der Anmeldung:
**18.03.81 Patentblatt 81/11**

(45) Bekanntmachung des Hinweises auf die Patenterteilung:
**18.01.84 Patentblatt 84/3**

(84) Benannte Vertragsstaaten:
**CH FR GB IT LI**

(56) Entgegenhaltungen:
**AT - B - 240 245**
**AT - B - 304 612**
**AT - B - 312 661**
**DE - A - 1 594 769**
**DE - A - 2 856 218**
**DE - C - 706 056**
**US - A - 1 409 104**

(73) Patentinhaber: **Alfelder Eisenwerke Carl Heise Kom.-Ges. vorm. Otto Wesselmann & Cie Hannoversche Strasse 7 D-3220 Alfeld (DE)**

(72) Erfinder: **Heise, Carl-Hermann, Ing. grad. Am Kuckuck 2 D-3220 Alfeld (DE)**
Erfinder: **Schaper, August, Ing. grad. Jägerstrasse 14 D-3220 Alfeld (Leine) (DE)**
Erfinder: **Mohmeyer, Heinrich, Ing. grad. Riedäckerring 22 D-3220 Alfeld (Leine) (DE)**

(74) Vertreter: **Patentanwälte Dipl.-Ing. Rudolf Bibrach Dipl.-Ing. Elmar Rehberg Pütterweg 6 Postfach 738 D-3400 Göttingen (DE)**

Courier Press, Leamington Spa, England.

Verfahren und Vorrichtung zum Aufbereiten von bituminösem Mischgut in einer befeuerten Drehtrommel

Die Erfindung bezieht sich auf ein Verfahren und eine Vorrichtung zum Aufbereiten von bituminösen Mischgut in einer befeuerten Drehtrommel, bei dem die Mineralien und das thermoplastische Bindemittel jeweils getrennt voneinander zugeführt und gemeinsam zu dem Mischgut vermischt werden, wobei die groben Mineralien getrennt vom Bindmittel zunächst getrocknet und erhitzt werden. Die Vorrichtung arbeitet mit einer befeuerten und mit Einbauten versehenen Drehtrommel und mit Abzugs- und Aufgabeinrichtungen für die Mineralien und das thermoplastische Bindemittel.

Ein derartiges Verfahren und eine entsprechende Vorrichtung zeigt die DE—OS 27 25 337. Dabei finden zwei konische, jeweils angetriebene Drehtrommeln Verwendung, die unterschiedliche Durchmesser aufweisen und einander umgebend mit gleicher Achse angeordnet sind. Der inneren Drehtrommel ist ein Brenner zugeordnet; die Mineralien werden im Gegenstromverfahren in dieser inneren Drehtrommel aufgeheizt, wobei auch infolge der Verwendung der feineren Mineralien eine beachtliche Staubentwicklung zu erwarten ist. Die Rauchgase werden aus der innern konischen Drehtrommel abgezogen und in ein Gehäuse gegeben, welches die äußere konische Drehtrommel umgibt. In diesem Gehäuse sind zusätzliche Brenner angeordnet, die die äußere Drehtrommel von außen beheizen. Ein Großteil der Wärme geht dabei verständlicherweise nach außen ungehutzt verloren. Am Übergang zwischen der inneren und der äußeren Drehtrommel werden Füller und Bindemittel gemeinsam aufgegeben, so daß an dieser Stelle die erhitzten Mineralien, der Füller und das Bindemittel gemeinsam vermischt werden. Da die Mineralien im Gegenstromverfahren erhitzt werden, besteht keine Möglichkeit, die Stäube durch das Bindemittel zu binden, da sie durch das Rauchgas ausgetragen werden und keine Gelegenheit haben, mit dem Bindemittel in Berdhrung zu kommen.

Eine ähnliche Einrichtung, jedoch nur unter Verwendung einer einzigen Drehtrommel, ist aus der CH—PS 567 628 bekannt. Dabei werden die Mineralien aus entsprechenden Silos mit einer Abzugseinrichtung abgezogen. Die Mineralien sollen eine gewisse Feuchtigkeit aufweisen und werden bei ungenügender Feuchtigkeit zusätzlich mit Wasser abgeduscht. Dieser Zuschlag mit dem Bitumen und ggf. dem Wasser wird in die Drehtrommel geleitet, die von der einen Stirnseite her bekannterweise durch einen Brenner beheizt wird. Vorzugsweise finden flüssige oder gasförmige Brennstoffe Verwendung. Durch spezielle Einbauten in der Drehtrommel wird ein kaskadenförmiger Durchsatz des Mischgutes erreicht. Das Mischgut wird dabei im Gleichstrom von den Rauchgasen und über die Strahlungswärme der offenen Flamme des Brenners erwärmt. Dabei kann es zu Schädigungen des thermoplastischen Bindemittels kommen. Die Hinzufügung von Wasser zu Mineralien ist jedoch auch nachteilig, weil das Wasser zumindest teilweise wieder verdampft werden muß. Auch ein im Mischgut vorhandener Restwassergehalt kann insbesondere in der kalten Jahreszeit zu Frostschäden führen. Die Hinzfügung von Wasser zu den Mineralien bewirkt auch Affinitätsmängel, d.h. die Haftung zwischen dem thermoplastichen Bindemittel, beispielweise Bitumen, und den Mineralien wird verschlechtert.

Aus der US—PS 3 423 222 ist est bereits bekannt, den Zuschlag, also die Mineralien, ohne Anfeuchtung in einer Drehtrommel zu lieten, Die Drehtrommel wird mit einem Brenner beheizt und im Gegenstromverfahren betrieben. Innerhalb der Drehtrommel wird erhitztes Bitumen mit erhitztem teilweise dampfförmigem Wasser eingedüst. Dabei kommen 5 bis 15% Wasser und 85 bis 95% Bindemittel gleichzeitig zur Anwendung. Das Wasser dient dem Zweck, den Staub der in der Drehtrommel bewegten Mineralien zu binden, das Bitumen zu kühlen und somit vor einer Zündung und einer vorzeitigen Aushärtung zu schützen. Es ist weiter vorgesehen, zusätzlich zu dem Wasser und dem Bindemittel noch Additive und andere Umhüllungshilfen in die Drehtrommel einzubringen.

Die DE—AS 26 17 839 zeigt eine Einrichtung zum Aufbereiten von bituminösem Mischgut mit einer im Gleichstrom befeuerten Drehtrommel, die in verschiedene Bereiche mit unterschiedlichen Aufgaben und Eigenschaften eingeteilt ist. Im Einzugsbereich sind spezielle Einbauten vorgesehen, um die Mineralien vor Staubbildung un Staubabscheidung zu schützen. Im anschließenden Vermengungsbereich wird Bitumen eingedüst und dabei die noch feuchten Mineralien mit dem Bindemittel vermengt. Auch bei dem Verfahren nach der DE—AS 1 594 815 beschränkt sich der erste Verfahrensabschnitt auf die Vermengung des Bindemittels mit dem noch nicht erhitzten Material, wobei sich im Hinblick auf das thermoplastiche Verhalten des Bindemittels dieses im wesentlichen in Kugelform mit geringer Bindefläche und Bindequalität an die noch feuchten Mineralpartikel anlagert, d. h. also lediglich eine statistische Verteilung des Bindemittels stattfindet, während im zweiten Verfahrensschritt die Mineralstoffe erhitzt und der wesentliche Wasseranteil verdampft werden soll, wobei das Bindemittel hinsichtlich der Bindung der Staubpartikel an die Gesteinspartikel die Funktion des Wassers übernehmen soll. Bei einer ähnlichen Einrichtung, die aus der DE—AS 21 02 328 bekannt ist, findet im Einzugsbereich jedoch eine derart starke Umwälzung des Mineralgutes statt, daß eine ungewollte vorzeitige Trocknung sich bereits vor der Vermengung mit dem Bindemittel einstellt. Dies bedeutet einen erhöhten Staubabfall durch die vorzeitige Aufhebung der Wasserbindung des Staubes an die Gesteinsteilchen und eine eingeschränkte Affinität zwischen Bindemittel und Gestein. Auch hier kann auf Umhüllungshilfen, wie beispielsweise Chromsalze oder Bariumsulfid, in der Regel nich verzichtet werden.

Aus der Zeitschrift Bitumen, Heft 2, 1979, Seiten 56 und 57, ist der gegenwärtige Stand der Ausphaltwiederaufbereitungstechnik in den USA bekannt. Im Gegensatz zu den vorher beschriebenen Einrichtungen geht es hier also darum, rückgewonnen Asphaltstraßenaufbruch oder abgefrästes Asphaltmaterial wieder aufzubereiten, d. h. zusammen mit neuem Material, in einen verarbeitungsfähigen und einbaufähigen Zustand zu versetzen. In der Regel werden Drehtrommeln hierzu verwendet. Dabei ist es bekannt, zwei jeweils angetriebene Drehtrommeln mit unterschiedlichen Durchmessern so zueinander anzuordnen, daß die innere Drehtrommel ein Stück in die âußere Drehtrommel hineinragt. Die innere Drehtrommel ist mit einem Brenner befeuert und dient dazu, in direkter Beheizung die Mineralien des zuzusetzenden Anteils aufzuheizen. Die innere Drehtrommel wird angetrieben, so daß sich die Mineralien, einschließlich des feinen Anteils, under entsprechender Staubentwicklung, durch die innere Drehtrommel bewegen. In dem Zwischenraum zwischen der inneren und der äußeren Drehtrommel wird der Asphaltstraßenaufbruch eingebracht und dabei direkt durch die Wandung der inneren Drehtrommel hindurch schonend aufgewärmt. Am Ende der inneren Drehtrommel in der äußeren Drehtrommel vereinigen sich die erhitzten Mineralien und der aufgewärmte Asphaltstraßenaufbruch, wobei gleichzeitig noch Bitumen hinzugefügt wird. Die äußere Drehtrommel besorgt dann einen weiteren Vermischungseffekt des Mischgutes, Bei diesem Verfahren ist bereits die Wärmeausnutzung besser und die Staubentwichlung geringer als bei dem eingangs beschriebenen Verfahren, da die Rauchgase durch die Mischzone gezogen werden, wo sie mit dem Bitumen in Berührung kommen können. Bei diesem Verfahren ist dennoch die Staubentwicklung nicht optimal. Weiterhin besteht die Gefahr, daß sich der wiederaufzubereitende Asphaltstraßenaufbruch auf der Außenwandung der inneren Drehtrommel absetzt, weil er durch die Drehbewegung in verstärktem Maße auf die Außenwandung der inneren Drehtrommel auffällt, jedoch keine Maßnahmen vorgesehen sind, um den Aufbruch auch dort wieder zu entfernen.

Die OE—PS 240 245 zeigt ein Verfahren zur Herstellung eines bituminösen Gemisches, welches insbesondere in der Wasserbautechnik Anwendung findet. Dabei werden grobe Steine mit einem Durchmesser von 50 bis 600 mm mit einem heißen, asphaltischen Betonmörtel, der eine Temperatur von 60 bis 180°C haben kann, vermischt, Der asphaltische Betonmörtel enthält Mineralien in Form von Natursteinen oder gebrochenen Steinen mit einem Durchmesser nicht über 50 mm, sowie Sand und/oder Füllstoff. Ein derartiges Mischgut ist in der Wasserbautechnick anwendbar, jedoch für den Straßenbau völlig ungeeignet. Der Betonmörtel enthält hier bereits die Mineralien sämtlicher Korngrößen-Klassifikationen, die überlicherweise bei der Herstellung von Straßenbaustoffen eingesetzt werden. Die Herstellung des Betonmörtels geschieht in üblicher Art und Weise.

Die DE—PS 706 056 zeigt ein Verfahren zur Herstellung eines Straßenbelagstoffes, bei dem die Splittkörner mit einer klebenden bituminösen Innenschicht und einer nicht klebenden Ausenschicht umhüllt werden, damit die Splittkörner erst bei Druckanwendung, z. B. infolge eines Walzvorganges auf der Straße, den notwendigen Zusammenhalt untereinander erhalten. Über die getrennte Behandlung der verschiedenen im Straßenbau verwendeten Mineralien gibt auch diese Druckschrift keine Auskunft.

Die DE—OS 1 594 769 zeigt ein Verfahren zur Herstellung eines bituminösen Belages, beispielweise für Straßendecken, bei dem erhitzter Gesteinsstoff mit bituminertem Füller gemischt wird. Dabei geht es darum, eine möglichst geringe Menge von bituminösem Bindemittel einzusetzen. Der mit dem bituminösem Bindemittel gemischte Füller wird dem erhitzten Gestein, also den Mineralien, hinzugefügt. Dabei enthalten die Mineralien ebenso wie bei dem Verfahren der DE—OS 27 25 337 auch den Sandanteil, also den Anteil an feinen Mineralien. Hierin sind aber beachtliche Staubmengen enthalten, die bei der getrennten Erhitzung der Mineralien frei werden und zu Belastungen im Abgas führen.

Die DE—OS 28 56 218 ziegt ein Verfahren und eine Vorrichtung zur Herstellung einer Asphaltmasse, wobei sämtliche neu benutzten Mineralien, also einschließlich des Sandes und des Füllers am einen Ende der Drehtrommel aufgegeben werden und nur aufgebrochenes oder abgefrästes Material an einer anderen Stelle der Trommel hinzugefügt wird. Auch hier läßt sich eine beachtliche Staubentwicklung nicht vermeiden.

Der Efindung liegt die Aufgabe zugrunde, ein Verfahren und eine Vorrichtung der eingangs beschriebenen Art so weiterzubilden, daß sich das Mischgut (neues Mischgut oder unter Mitwirkung von Asphaltstraßenaufbruch) weitgehend staubfrei und kostengünstig herstellen läßt. Dabei müssen also die Stäube weitgehend gebunde, die Affinität zwischen Bindemittel und Mineralien verbessert werden, aber gleichzeitig die erwärmung des Mischgutes bei verbesserter Wärmeausnutzung schonend erfolgen, damit Überhitzungserscheinungen des

thermoplastichen Bindemittels, insbesondere bei Mitverwendung von Asphaltstraßenaufbruch, und ein vorzeitiges Aushärten verhindert werden.

Erfindungsgemäß wird dies dadurch erreicht, daß das grobe Mineral allein getrocknet und erhitzt wird, daß das feine Mineral aus Füller, Sand und/oder feinem Splitt allein mit dem Bindemittel gemischt und dabei indirekt erwärmt wird, und daß diesem Vormischgut das erhitzte grobe Mineral hinzugefügt und das Vormischgut mit dem groben Mineral vermischt . wird. Damit werden die feinen Mineralien, die nicht nur ans Füller, sondern auch aus Sand und/oder feinem Splitt bestehen, getrennt zu den groben Mineralien behandelt. Die für die Gesamtmenge des zu erstellenden Mischgutes erforderliche Bindemittelmenge wird dabei allein auf die feinen Mineralien aufgeteilt, wodurch eine sichere und intensive Umhüllung dieses feinen Minerals stattfindet. Die Stäube werden dabei sicher gebunden, so daß sie erste gar nicht als freie bewegliche Partikel entstehen können. All dies findet bei indirekter Erwärmung statt, die einerseits den Vorteil der schonenden Aufwärmung hat und andererseits eine weite verbesserte Wärmeausnutzung garantiert, da nur ein einziger Brenner vorhanden sein.muß. Zusatzbrenner werden entbehrlich. Bei. der Vermischung dieses indirekt erwärmten Vormischgutes mit den erhitzten groben Mineralien werden auch die groben Mineralien mit dem Bindemittel in Kontakt gebracht, so daß letztlich eine gleichmäßige Durchmischung und Benetzung mit dem Bindemittel stattfindet.

Das feine Mineral kann mit dem Bindemittel zwangsgemischt werden. Dierdurch wird eine Besonders intensive Vermischung garantiert. Andererseits wird die Gefahr des Ansetzens an der Außenwandung der inneren Trommel vermieden, bei die bei Zwangsmischern üblichen Mischarme immer wieder dafür sorgen, daß eine weitgehende Reinigung und mechanische Abnahme des Materials von den gefährdeten flächenpartien Stattfindet.

Als feines Mineral, welches der getrennten Behandlung unterworfen wird, findet Füller, Sand und/oder feiner Splitt Verwendung, je nach dem Anwendungsfall und der gewünschten Zusammensetzung. Das feine Material kann aber auch ganz oder teilweise durch rückgewonnen Asphaltstraßenaufbruch oder abgefrästes Asphaltmaterial ersetzt werden. Diesem Material kommt dann der Vorteil der indirekten Befeuerung und der schonenden Aufwärmung zugute, so daß mit Sicherheit das Entstehen des sog. blauen Rauches vermieden werden kann.

Die Vorrichtung zur Durchführung des Verfahrens arbeitet mit einer befeuerten und mit Einbauten versehenen Drehtrommel und mit Abzugs- und Aufgabeeinrichtungen für die Mineralien und das thermoplastische Bindemittel und kennzeichnet sich dadurch, daß der Drehtrommel eine weitere Trommel zugeordnet ist, wobei zwischen der Drehtrommel und der weiteren Trommel ein Vormischer für die Mischung der feinen Mineralien mit dem Bindemittel gebildet ist, der indirekt durch die Wandung der Drehtrommel hindurch beheizt ist. Dabei kann die weitere Trommel auch angetrieben sien, so daß sich im Vormischer eine sehr intensive Vermischung abspielen kann. Vorzugsweise ist die weitere Trommel jedoch stillstehend angeordnet und umgibt die Drehtrommel auf einem Teil ihrer Länge, wobei zwischen den beiden Wandungen der Ringraum des Vormischers gebildet ist. Damit wird eine konstruktive Stelle geschicht genutzt, um einen Vormischer auszubilden, während im Stand der Technick dieser Ringraum lediglich als Aufheizstrecke für den gewonnenen Asphaltstraßenaufbruch diente.

Der Vormischer kann also Zwangsmischer ausgebildet sein, wobei sowohl die Außenseite der Wandung der Drehtrommel also auch die Innenseite der Wandung der Trommel im Bereich des Ringraumes mit Mischarmen besetzt sind. Der konstruktive Aufwand für einen solchen Zwangsmischer ist äußerst gering. Vor allen Dingen kann der Antrieb direkt von dem Antrieb der Drehtrommel abgeleitet werden, so daß sich die Anordnung eines zusätzlichen Antriebes erübrigt. Gleichzeitig sorgen die Mischarme dafür, daß die Außenwandung der Drehtrommel im Bereich dieses Vormischers laufend von etwa anhaftendem Material befreit werden, was schließlich auch dem Wärmeübergang zugutekommt. So gesehen ergibt sich auch eine bessere Wärmeausnutzung der von dem Brenner, der der Drehtrommel zugeordnet ist, freigesetzten Wärmemenge. An dem Umfang der stillstehenden Trommel können die Zugabeanschlüsse für die feinen Mineralien und/oder das wiederaufzubereitende Asphaltgut und für das thermoplastische Bindemittel vorgesehen sein. Selbstverständlich ergibt sich auch die Möglichkeit, teilweise stirnwandseitig Material einzuführen. Dies ist aber dann nicht erforderlich, wenn die weitere Trommel stillstehend angeordnet ist.

Die Zugabeanschlüsse können mit Abstand zueinander vorgesehen sein und im Bereich des Brenners für die innenliegende Drehtrommel kann der Zugabeanschluß für die feineren Mineralien und/oder das wiederaufzubereitende Asphaltgut angeordnet sein. Damit ergibt sich die Möglichkeit, die feineren Mineralien und/oder das wiederaufzubreitende Asphaltgut zunächst auf einer Teilstrecke aufzuwärmen und auf eine solche Temperatur zu bringen, bei der dann das ebenfalls vorgewärmte Bindemittel hinzugefügt wird, so daß die zur Erwärmung des Bitumens bzw. des plastischen Bindemittels erforderliche Wärme menge nicht allein von dem feinen Material aufgebracht werden muß, welches bei bestimmten Anwendungsfällen mit sehr kleinem Anteil eingebracht wird. Zwischen den Zugabeanschlüssen ist also vor der Bindemittelaufgabe eine indirekte Aufwärmstrecke für die feineren Mineralien und/oder das wiederaufzubereitende Asphaltgut vorgesehen.

Die Drehtrommel kann im Durchmesser zweckmäßig abgesetzt ausgebildet sein und im Überdeckungsbereich mit der Trommel den kleinen Durchmesser aufweisen. Dies stellt eine konstruktiv geschickte Lösung dar. Es ergibt sich nämlich die Möglichkeit, daß der Durchmesser der Trommel kleiner als der größte Durchmesser der Drehtrommel und größer also der kleinste Durchmesser der Drehtrommel ausgebildet werden kann, wodurch sich eine Menge an Dichtungsproblemen einsparen lassen und die Überführung der getrennt behandelten Materialkomponenten in den gemeinsamen Behandlungsabschnitt der Drehtrommel vereinfacht wird. Die stillstehende Trommel weist eine Stirnwand auf, die den Brenner für die Drehtrommel und den Zugabeanschluß für das grobe Mineral trägt. Diese Stirnwand dichtet gleichzeitig die Stirnseite der Drehtrommel gegenüber der Atmosphäre ab. Die Zugabeanschlüsse selbst können weitehend luftdicht, insbesondere als Doppelkammern, Zellenschleusen od. dgl. ausgebildet sein, so daß auch der Luftdurchsatz innerhalb der Vorrichtung genau eingehalten und auf die Verbrennung abgestimmt werden kann.

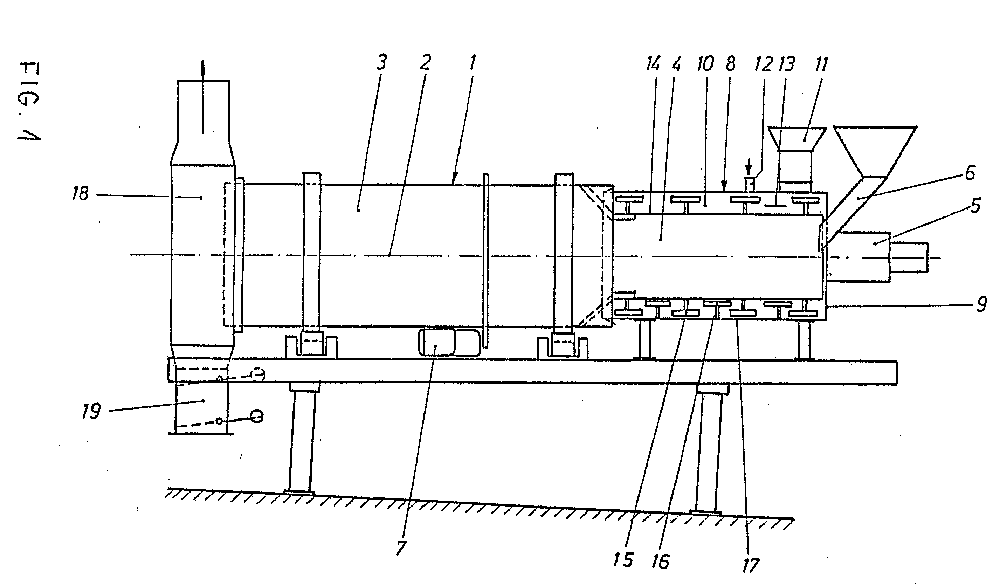

Die Erfindung wird anhand einer besonders geeigneten Vorrichtung weiter beschrieben, die im Querschnitt in der Zeichnung schematisch dargestellt ist. Die Drehtrommel 1 ist mit geneigter Achse 2 angeordnet und besitzt einen ersten Teil 3 mit vergleichsweise größerem Durchmesser an den sich ein im Durchmesser verkleinerter Teil 4 anschließt. Ein Brenner 5 ist stirnseitig und eingangsseitig der Drehtrommel 1 zugeordnet. In den Teil 4 der Drehtrommel 1 führt stirnseitig in der Nähe des Brenners ein Zugabeanschluß 6, durch den grobe Mineralien in das Innere des Teils 4 der Drehtrommel, welches hier mit Einbauten versehen ist, eingeleitet werden. Diese groben Mineralien neigen vergleichsweise weniger zu Staubentwicklung und werden unschädlich bei guter Wärmeausnutzung auch durch Strahlungswärme aufgeheizt. Sie bewegen sich kaskandenförmig durch den Teil 4 der Drehtrommel 1, die beispielsweise mit Hilfe des Motors 7 angetrieben wird.

Der Teil 4 der Drehtrommel 1 ist von einer weiteren Trommel 8 umgeben, die stillstehend angeordnet ist und deren Stirnwand 9 einerseits den Brenner 5 trägt und andererseits sowohl die Drehtrommel wie auch die Trommel 8 selbst nach der Atmosphäre hin abschließt. Die weitere Trommel 8 bildet mit dem Teil 4 der Drehtrommel 1 einen Ringraum 10, der als Vormischer ausgebildet ist. In der Nähe des Beginns der Trommel 8 ist ein Zugabeanschluß 11 für feinere Mineralien, also Füller, Sand, feiner Split, oder aber auch für Asphaltstraßenaufbruch und abgefrästes Asphaltmaterial vorgesehen. Ein weiterer Zugabeanschluß 12 für das Bitumen ist mit Abstand zu dem Zugabeanschluß 11 angeordnet, so daß zwischen diesen beiden Anschlüssen eine Aufwärmstrecke 13 für das entsprechende Material gebildet ist. Wie ersichtlich, wird der Ringraum 10 und der dort gebildete Vormischer indirekt durch die Wandung 14 des Teiles 4 der Drehtrommel 1 hindurch beheizt. Der Vormischer kann zweckmäßig als Zwangsmischer ausgebildet sein, wozu die Mischarme 15 und 16 dienen, die sowohl auf der Außenseite der Wandung 14 des Teiles 4 der Drehtrommel 1 sowie auch auf der Innenseite der Wandung 17 der Trommel 8 vorgesehen sind. Durch diese Ausbildung des Zwangsmischers wird eine besonders intensive Vermischung des gesondert behandelten Materials erreicht. Die Wandung 14 des Teiles 4 der Drehtrommel 1 wird laufend durch die Mischarme 16 gereinigt, so daß einer Verschlechterung des Wärmeüberganges entgegengewirkt wird. Durkh die Hinzufügung des plastichen Bindemittels an dem Zugabeanschluß 12 können sich Stäube aus den feinen Mineralien, die sonst besonders anfällig hierfür sind, erst gar nicht entwickeln, so daß sie auch im Rauchgas nich anfallen. Die groben Mineralien im Innern des Teiles 4 der Drehtrommel 1 neigen erfahrungsgemäß weit weniger zur Staubentwicklung. Zusätzlich werden diese Rauchgase aber noch im Teil 3 der Drehtrommel 1 durch das Mischgut geführt, welches ja mit dem plastichen Bindemittel umhüllt ist, so daß hier ausreichend Möglichkeit ist, diesen von haus aus schon geringen Staubanteil abzuscheiden und zu reduzieren. Am Ende der Drehtrommel ist einerseits der Abgabeschacht 18 für das Rauchgas und andererseits eine Abzugseinrichtung 19 für das Mischgut vorgesehen.

## Patentansprüche

1. Verfahren zum Aufbereiten von bituminösem Mischgut in einer befeuerten Drehtrommel, bei dem die Mineralien und das thermoplastische Bindemittel jeweils getrennt voneinander zugeführt und gemeinsam zu dem Mischgut vermischt werden, wobei die groben Mineralien getrennt vom Bindemittel zunächst getrocknet und erhitzt werden, dadurch gekennzeichnet, daß das grobe Mineral allein getrocknet und erhitzt wird, daß das feine Mineral aus Füller, Sand und/oder feinem Splitt allein mit dem Bindemittel gemischt und dabei indirekt erwärmt wird, und daß diesem Vormischgut das erhitzte grobe Mineral hinzugefügt und das Vormischgut mit dem groben Mineral vermischt wird.

2. Verfahren nach Anspruch 1, dadurch gekennzeichnet, daß das feine Mineral mit dem Bindemittel zwangsgemischt wird.

3. Verfahren nach Anspruch 1 und 2, dadurch gekennzeichnet, daß das feine Mineral ganz oder teilweise durch rückgewonnen Asphaltstraßenaufbruch der abgefrästes Asphaltmaterial ersetzt wird.

4. Vorrichtung zur Durchführung des Verfahrens nach den Ansprüchen 1 bis 3, mid einer
befeuerten und mit Einbauten versehenen Drehtrommel und mit Abzugs- und Aufgabeeinrichtungen für die Mineralien und das thermoplastische Bindemittel, dadurch gekennzeichnet, daß der Drehtrommel (1) eine weitere
Trommel (8) zugeordnet ist, wobei zwischen der
Drehtrommel (1) und der weiteren Trommel (8)
ein Vormischer für die Mischung der feinen
Minerale mit dem Bindemittel gebildet ist, der
indirekt durch die Wandung (14) der Drehtrommel (1) hindurch beheizt ist.

5. Vorrichtung nach Anspruch 4, dadurch gekennzeichnet, daß die weitere Trommel (8) stillstehend angeordnet ist und die Drehtrommel (1)
auf einem Teil ihrer Länge umgibt, wobei
zwischen den beiden Wandungen (14, 17) der
Ringraum (10) des Vormischers gebildet ist.

6. Vorrichtung nach Anspruch 4 und 5, dadurch gekennzeichnet, daß der Vormischer also
Zwangsmischer (10, 15, 16) ausgebildet ist und
sowohl die Außenseite der Wandung (14) der
Drehtrommel (1) als auch die Innenseite der
Wandung (17) der Trommel (8) im Bereich des
Ringraumes (10) mit Mischarmen (15, 16)
besetzt sind.

7. Vorrichtung nach Anspruch 4 bis 6, dadurch gekennzeichnet, daß an dem Umfang der
stillstehenden Trommel (8) die Zugabenanschlüsse (11, 12) für die feinen Mineralien
und/oder das wiederaufzubereitende Asphaltgut und für das thermoplatische Bindemittel
vorgesehen sind.

8. Vorrichtung nach Anspruch 7, dadurch
gekennzeichnet, daß die zugabeanschlüsse (11,
12) mit Abstand zueinander vorgesehen sind
und im Bereich des Brenners (5) für die innenliegende Drehtrommel der Zugabeanschluß (11)
für die feinen Mineralien und/oder das wiederaufzubereitende Asphaltgut vorgesehen ist.

9. Vorrichtung nach Anspruch 7 und 8, dadurch gekennzeichnet, daß zwischen den Zugabeanschlüssen (11, 12) vor der Bindemittelaufgabe eine indirekte Aufwärmstrecke (13) für die
feinen Mineralien und/oder das wiederaufzubereitende Asphaltgut vorgesehen ist.

10. Vorrichtung nach Anspruch 4 bis 9, dadurch gekennzeichnet, daß die Drehtrommel (1)
im Durchmesser abgesetzt ausgebildet ist und
im Überdeckungsbereich mit der Trommel (8)
den kleineren Durchmesser aufweist.

11. Vorrichtung nach Anspruch 10, dadurch
gekennzeichnet, daß der Durchmesser der
Trommel (8) kleiner als der größte Durchmesser der Drehtrommel (1) ind größer als der
kleinste Durchmesser der Drehtrommel ausgebildet ist.

12. Vorrichtung nach Anspruch 10 und 11,
dadurch gekennzeichnet, daß die stillstehende
Trommel (8) eine Stirnwand (9) aufweist, die
den Brenner (5) für die Drehtrommel (1) und den
Zugabeanschluß (6) für das grobe Mineral trägt.

13. Vorrichtung nach Anspruch 7 bis 12, dadurch gekennzeichnet, daß die Zugabeanschlüsse (6, 11, 12) weitgehend luftdicht,
insbesondere also Doppelkammern, Zellenschleusen o. dgl. ausgebildet sind.

**Revendications**

1. Procédé pour le traitement d'un mélange
bitumineux dans un tambour rotatif muni d'un
système de chauffe, et dans lequel les minéraux
et le liant thermoplastique sont amenés chaque
fois séparément les uns des autres et mélangés
ensemble au mélange, les minéraux grossiers
étant d'abord séchés et chauffés séparément du
liant, caractérisé en ce que le minéral grossier
est séché et chaufé seul, que le minéral fin,
constitué de charges, de sable et/ou de gravillon
fin, est mélangé seul au liant et échauffé ainsi
indirectement, qu'à ce produit prémélangé on
ajout le minéral grossier chauffé, et que ce produit prémélangé est mélangé au minéral grossier.

2. Procédé suivant la revendication 1, caractérisé en ce que le matériau fin est malaxé avec
le liant.

3. Procédé suivant les revendications 1 et 2,
caractérisé en ce que le matériau fin est
remplacé entièrement ou en partie par du
matériau défoncé et récupéré de routes
asphaltées ou par du matériau asphalté enlevé à
la fraise et récupéré.

4. Dispositif pour l'exécution du procédé
suivant les revendications 1 à 3, comportant un
tambour rotatif muni d'un système de chauffe et
de chicanes et comportant aussi des dispositifs
d'extraction et d'alimentation pour les minéraux
et le liant thermoplastique, caractérisé en ce
que du tambour rotatif (1) dépend un autre
tambour (8), cependant qu'entre le tambour
rotatif (1) et l'autre tambour (8) il est formé un
prémélangeur pour le mélange des minéraux
fins avec le liant, qui est chauffé indirectement à
travers la paroi (14) du tambour rotatif (1).

5. Dispositif suivant la revendication 4, caractérisé en ce que l'autre tambour (8) est monté
immobile et qu'il entoure le tambour rotatif (1)
sur une partie de sa longueur, l'espace annulaire
(10) du prémélangeur étant formé entre les
deux parois (14, 17).

6. Dispositif suivant les revendications 4 et 5,
caractérisé en ce que le prémélangeur est
realisé sous forme d'un malaxeur (10, 15, 16) et
qu'aussi bien l'extérieur de la paroi (14) du
tambour rotatif (1) que l'intérieur de la paroi
(17) du tambour (8) sont munis de bras
mélangeurs (15, 16) dans la zone de l'espace
annulaire (10).

7. Dispositif suivant les revendications 4 à 6,
caractérisé en ce que, sur le pourtour du
tambour immobile (8), des raccords additionnnels (11, 12) sont prévus pour les
minéraux fins et/ou pour le produit asphalté à
retraiter ainsi que pour le liant thermoplastique.

8. Dispositif suivant la revendication 7, caractérisé en ce que les raccords additionnels (11, 12) sont prévus à une certaine distance l'un de l'autre et que, dans la zone du brûleur (5) pour le tambour rotatif intérieur, le raccord additionnel (11) est prévu pour les minéraux fins et/ou pour le produit asphalté à retraiter.

9. Dispositif suivant les revendications 7 et 8, caractérisé en ce qu'entre les raccords additionnels (11, 12) et avant l'alimentation en liant, il est prévu un tronçon d'échauffement indirect (13) pour les minéraux fins et/ou le produit à retraiter.

10. Dispositif suivant les revendications 4 à 9, caractérisé en ce que le tambour rotatif (1) est étagé en diamètre et son plus petit diamètre se présente dans la zone de recouvrement par la tambour (8).

11. Dispositif suivant la revendication 10, caractérisé en ce que le diamètre du tambour (8) est inférieur au plus grand diamètre du tambour rotatif (1) et supérieur au plus petit diamètre du tambour rotatif.

12. Dispositif suivant les revendications 10 et 11, caractérisé en ce que le tambour immobile (8) comporte une paroi frontale (9), qui porte le brûleur (5) du tambour rotatif (1) et le raccord additionnel (6) pour le minéral grossier.

13. Dispositif suivant les revendications 7 à 12, caractérisé en ce que les raccords additionnels (6, 11, 12) sont exécutés d'une manière largement étanche à l'air, en particulier sous forme de chambres doubles, d'écluses multicellulaires ou d'installations analogues.

**Claims**

1. Process for the preparation of bituminous mix in a fired rotary drum, in which the minerals and the thermoplastic binder are each fed in separately from one another and are mixed in common to provide the mix, the coarse minerals being first dried and heated separately from the binder, characterised in that the coarse mineral is dried and heated by itself, that the fine mineral consisting of filler, sand and/or fine chippings is mixed only with the binder and thus heated indirectly, and that the heated coarse mineral is added to this pre-mix and the pre-mix is mixed with the coarse mineral.

2. Process according to Claim 1, characterised in that the fine mineral is mixed with the binder by the pressure-mixing.

3. Process according to Claims 1 and 2, characterised in that the fine material is replaced, wholly or partially, by recovered broken-up asphalt road material or milled-off asphalt material.

4. Equipment for carrying out the process according to Claims 1 to 3, having a rotary drum which is fired and provided with inserts, and having discharging and charging devices for minerals and the thermoplastic binder, characterised in that the rotary drum (1) is associated with a further drum (8), a premixer for mixing the fine minerals with the binder being formed between the rotary drum (1) and the further drum (8), which premixer is heated indirectly through the wall (14) of the rotary drum (1).

5. Equipment according to Claim 4, characterised in that the further drum (8) is arranged to be stationary and surrounds the rotary drum (1) for a part of its length, the annular space (10) of the premixer being formed between the two walls (14, 17).

6. Equipment according to Claims 4 and 5, characterised in that the premixer is designed as a pressure-mixer (10, 15, 16) and both the outside of the wall (14) of the rotary drum (1) and the inside of the wall (17) of the drum (8) are fitted with mixing arms (15, 16) in the region of the annular space (10).

7. Equipment according to Claims 4 to 6, characterised in that the feed connections (11, 12) for the fine minerals and/or the asphalt material to be reprocessed and for the thermoplastic binder are provided on the periphery of the stationary drum (8).

8. Equipment according to Claim 7, characterised in that the feed connections (11, 12) are provided at a mutual distance, and the feed connection (11) for the fine minerals and/or the asphalt material to be reprocessed is provided in the region of the burnder (5) for the rotary drum located on the inside.

9. Equipment according to Claims 7 and 8, characterised in that an indirect heating-up section (13) for the fine minerals and/or the asphalt material to be reprocessed is provided between the feed connections (11, 12), upstream of the binder charge.

10. Equipment according to Claims 4 to 9, characterised in that the rotary drum (1) is formed with stepped diameter and has the smaller diameter in the region overlapping with the drum (8).

11. Equipment according to Claim 10, characterised in that the diameter of the drum (8) is made smaller than the greatest diameter of the rotary drum (1) and greater than the smallest diameter of the rotary drum.

12. Equipment according to Claims 10 and 11, characterised in that the stationary drum (8) has an end wall (9) which carries the burner (5) for the rotary drum (1) and the feed connection (6) for the coarse mineral.

13. Equipment according to Claims 7 to 12, characterised in that the feed connections (6, 11, 12) are designed to be largely air-tight, and in particular are designed as double chambers, cellular wheel locks or the like.

FIG. 1